(19) Europäisches Patentamt / European Patent Office / Office européen des brevets

(11) **EP 3 670 557 A1**

(12) # EUROPÄISCHE PATENTANMELDUNG

(43) Veröffentlichungstag:
**24.06.2020 Patentblatt 2020/26**

(51) Int Cl.:
**C08G 18/42** $^{(2006.01)}$     **C08G 63/42** $^{(2006.01)}$
**C08G 63/82** $^{(2006.01)}$

(21) Anmeldenummer: **18215191.0**

(22) Anmeldetag: **21.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG EINES POLYOXYALKYLENPOLYESTERPOLYOLS**

(57) Gegenstand der Erfindung ist ein Verfahren zur Herstellung eines Polyoxyalkylenpolyesterpolyols durch Umsetzung eines Polyoxyalkylenpolyols mit einem Lacton in Gegenwart eines Brönstedsauren Katalysators, wobei der Katalysator einen pKs-Wert von 1 oder kleiner aufweist, wobei die zahlenmittlere Molmasse des Polyoxyalkylenpolyol $\geq$ 1000 g/mol, bevorzugt $\geq$ 1500 g/mol, besonders bevorzugt $\geq$ 2000 g/mol beträgt, und wobei im Lacton eine $CH_2$ Gruppe an den Ringsauerstoff gebunden ist. Ein weiterer Gegenstand sind Polyoxyalkylenpolyesterpolyole erhältlich nach dem erfindungsgemäßen Verfahren sowie ein Verfahren zur Herstellung von Polyurethanen durch Umsetzung der erfindungsgemäßen Polyoxyalkylenpolyesterpolyole mit Polyisocyanaten.

Printed by Jouve, 75001 PARIS (FR)

**Beschreibung**

Gegenstand der Erfindung ist ein Verfahren zur Herstellung eines Polyoxyalkylenpolyesterpolyols durch Umsetzung eines Polyoxyalkylenpolyols mit einem Lacton in Gegenwart eines Brönsted-sauren Katalysators, wobei der Katalysator einen pKs-Wert von 1 oder kleiner aufweist, wobei die zahlenmittlere Molmasse des Polyoxyalkylenpolyols $\geq$ 1000 g/mol, bevorzugt $\geq$ 1500 g/mol, besonders bevorzugt $\geq$ 2000 g/mol beträgt, und wobei im Lacton eine $CH_2$ Gruppe an den Ringsauerstoff gebunden ist. Ein weiterer Gegenstand sind Polyoxyalkylenpolyesterpolyole erhältlich nach dem erfindungsgemäßen Verfahren sowie ein Verfahren zur Herstellung von Polyurethanen durch Umsetzung der erfindungsgemäßen Polyoxyalkylenpolyesterpolyole mit Polyisocyanaten.

In WO2008/104723 A1 wird ein Verfahren zur Herstellung eines Polylactons oder Polylactams offenbart, bei dem das Lacton oder Lactam mit einer H-funktionellen Startersubstanz in Gegenwart eines nicht-chlorierten, aromatischen Lösungsmittels und einer Sulfonsäure im Mikroliter-Maßstab umgesetzt wird. Hierbei werden als H-funktionelle Startersubstanz niedermolekulare monofunktionelle oder polyfunktionelle Alkohole oder Thiole verwendet, wobei in den Ausführungsbeispielen n-Pentanol, mit ε-Caprolacton oder δ-Valerolacton in Gegenwart von hohen Mengen an Trifluormethansulfonsäure von 2.5 mol-% oder mehr offenbart ist.

In Couffin et al. Poly. Chem 2014, 5, 161 wird eine selektive O-Acyl Öffnung von β-Butyrolacton an H-funktionelle Startersubstanzen wie beispielsweise n-Pentanol, 1,4-Butandiol und Polyethylenglycol in deuteriertem Benzol und in Gegenwart von Trifluormethansulfonsäure im batch-Modus offenbart. Hierbei werden die Umsetzungen im Mikroliter-Maßstab durchgeführt und dabei hohe Mengen des Säurekatalysators von 1 mol-% oder mehr bezogen auf die Menge an eingesetztem Lacton verwendet.

In US5032671 wird ein Verfahren zur Herstellung von polymeren Lactonen durch Umsetzung einer H-funktionellen Startersubstanz und Lactonen in Gegenwart eines Doppelmetallcyanid-(DMC)-Katalysators offenbart. In den Ausführungsbeispielen werden hierbei die Umsetzung von Polyetherpolyolen mit ε-Caprolacton, δ-Valerolacton oder β-Propiolacton zu PolyetherPolyesterpolyol Blockcopolymeren offenbart, wobei diese Reaktionen in Gegenwart hoher Mengen des Cobalt-haltigen DMC-Katalysators von 980 ppm bis 1000 ppm und in Gegenwart von organischen Lösungsmitteln durchgeführt wird, wobei die resultierenden Produkte eine breite Molmassenverteilung von 1.32 bis 1.72 aufweisen. Zudem ist in diesem Verfahren ein Aufarbeitungsschritt notwendig, bei dem die Produkte über Diatomeenerde filtriert und anschließend das Lösungsmittel entfernt wird.

In GB1201909 wird ebenfalls ein Verfahren zur Herstellung von Polyestern durch Umsetzung eines Lactons mit einer H-funktionellen Starterverbindung in Gegenwart einer organischen Carbon- oder Sulfonsäure, deren pKs-Wert bei 25 °C kleiner als 2.0 ist, offenbart. Hierbei werden alle Reaktionskomponenten wie kurzkettige Alkohole sowie ε-Caprolacton oder Mischungen aus isomeren Methyl-epsilon Caprolactonen in hohen Mengen an Trichlor- oder Trifluoressigsäure-Katalysator vorgelegt und im batch-Verfahren für mindestens 20h umgesetzt, wobei Feststoffe oder flüssige Produkt resultieren.

WO 2011/000560 A1 offenbart ein Verfahren zur Herstellung von Polyetheresterpolyolen mit primären Hydroxyl-Endgruppen, umfassend die Schritte der Reaktion einer aktive Wasserstoffatome aufweisenden Starterverbindung mit einem Epoxid unter Doppelmetallcyanid-Katalyse, der Reaktion des erhaltenen Produktes mit einem zyklischen Carbonsäureanhydrid sowie der Reaktion dieses erhaltenen Produktes mit Ethylenoxid in Gegenwart eines Katalysators, welcher pro Molekül mindestens ein Stickstoffatom umfasst, wobei nicht-zyklische, identisch substituierte tertiäre Amine ausgenommen sind. Die resultierenden Polyetheresterpolyole dieses mehrstufigen Verfahrens weisen einen primären Hydroxylgruppenanteil von maximal 76 % auf.

Ausgehend vom Stand der Technik war es daher Aufgabe der vorliegenden Erfindung ein vereinfachtes, möglichst einstufiges Verfahren zur Herstellung von langkettigen Polyoxyalkylenpolyesterpolyolen mit einer zahlenmittleren Molmasse von mindestens 1200 g/mol und einem primären Hydroxylgruppenanteil von $\geq$ 80 % bezogen auf die Summe aus primären und sekundären terminalen Hydroxylgruppen bereitzustellen. Hierbei sollen die resultierenden Polyole enge zahlenmittlere Molmassenverteilungen mit Polydispersitätsindices (PDI) von kleiner gleich 1,2 aufweisen. In diesem Verfahren sollten zudem möglichst geringe Mengen eines hochreaktiven, schwermetall-freien Katalysators verwendet werden, so dass möglichst keine Abtrennung des Katalysators vor der Weiterverarbeitung notwendig ist.

Überraschenderweise wurde gefunden, dass die technische Aufgabe gelöst wird durch ein Verfahren zur Herstellung eines Polyoxyalkylenpolyesterpolyols durch Umsetzung eines Polyoxyalkylenpolyols mit einem Lacton in Gegenwart eines Brönsted-sauren Katalysators; wobei der Katalysator einen pKs-Wert von 1 oder kleiner aufweist, wobei die zahlenmittlere Molmasse des Polyoxyalkylenpolyols $\geq$ 1000 g/mol, bevorzugt $\geq$ 1500 g/mol, besonders bevorzugt $\geq$ 2000 g/mol beträgt, und wobei im Lacton eine $CH_2$ Gruppe an den Ringsauerstoff gebunden ist.

Im erfindungsgemäßen Verfahren wird die zahlenmittlere Molmasse, beispielsweise der Polyoxyalkylenpolyole und der erfindungsgemäßen Polyoxyalkylenpolyesterpolyole, mittels der im Experimentalteil offenbarten Gel-Permeations-Chromatographie (GPC) bestimmt.

Polyoxyalkylenpolyol

Im erfindungsgemäßen Verfahren beträgt die zahlenmittlere Molmasse des Polyoxyalkylenpolyols ≥ 1000 g/mol, bevorzugt ≥ 1500 g/mol und besonders bevorzugt ≥ 2000 g/mol.

Im erfindungsgemäßen Verfahren beträgt die zahlenmittlere Molmasse des Polyoxyalkylenpolyols ≤ 30000 g/mol, bevorzugt ≤ 25000 g/mol und besonders bevorzugt ≤ 20000 g/mol.

In einer bevorzugten Ausführungsform des erfindungsgemäßen Verfahrens beträgt die zahlenmittlere Molmasse des Polyoxyalkylenpolyols ≥ 1000 g/mol bis ≤ 30000 g/mol, bevorzugt ≥ 1500 g/mol bis ≤ 25000 g/mol und besonders bevorzugt ≥ 2000 g/mol bis ≤ 20000 g/mol.

Das Polyoxyalkylenpolyol weist im Allgemeinen eine OH-Funktionalität (d.h. Anzahl an für die Polymerisation aktiven H-Atomen pro Molekül) von 2 bis 8, bevorzugt von 2 bis 6 und besonders bevorzugt von 2 bis 4 auf. Das Polyoxyalkylenpolyol kann entweder einzeln oder als Gemisch aus mindestens zwei Polyoxyalkylenpolyolen eingesetzt.

Als Polyoxyalkylenpolyol können beispielsweise eine oder mehrere Verbindungen ausgewählt werden aus der Gruppe umfassend Polyetherpolyole, Polyesterpolyole, Polyesteretherpolyole, Polyethercarbonatpolyole, Polycarbonatpolyole, Polytetrahydrofurane (z.B. PolyTHF® der BASF, wie z.B. PolyTHF® 1000, 1000S, 1400, 1800, 2000).

In einer Ausführungsform des erfindungsgemäßen Verfahrens weist das Polyoxyalkylenpolyol einen Anteil von mindestens 75 % sekundären OH-Endgruppen bezogen auf die Summe aus primären und sekundären OH-Endgruppen auf, wobei die sekundären OH-Endgruppen mittels der im Experimentalteil offenbarten 1H-NMR-Spektroskopie bestimmt worden sind.

In einer Ausführungsform der Erfindung können die Polyoxyalkylenpolyole aus der Substanzklasse der Polyetherpolyole ausgewählt sein. Bevorzugt sind Polyetherpolyole, die aus sich wiederholenden Ethylenoxid- und Propylenoxideinheiten aufgebaut sind, bevorzugt mit einem Anteil von 50 bis 100 % Propylenoxideinheiten, besonders bevorzugt mit einem Anteil von 80 bis 100 % Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro AG (wie z.B. Desmophen® 3600Z, Desmophen® 1900U, Acclaim® Polyol 2200, Acclaim® Polyol 4000I, Arcol® Polyol 1010, Arcol® Polyol 1030, Arcol® Polyol 1070, Baycoll® BD 1110, Bayfill® VPPU 0789, Baygal® K55, Polyether® S180). Weitere geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

In einer Ausführungsform der Erfindung können die Polyoxyalkylenpolyole aus der Substanzklasse der Polyesterpolyole ausgewählt sein, insbesondere solchen mit einem Molekulargewicht Mn im Bereich von 1000 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyoxyalkylenpolyesterpolyole dienen können. Bevorzugt werden Polyetherpolyole mit Mn = 150 bis 2000 g/mol zur Herstellung der Polyesteretherpolyole eingesetzt.

In einer Ausführungsform der Erfindung können die Polyoxyalkylenpolyole aus der Substanzklasse der Polycarbonatdiole ausgewählt sein, insbesondere solche mit einem Molekulargewicht Mn im Bereich von 1000 bis 4500 g/mol, vorzugsweise 1500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können die Polyoxyalkylenpolyole aus der Substanzklasse der Polyethercarbonatpolyole (z.B. cardyon® Polyole der Fa. Covestro), Polycarbonatpolyole (z.B. Converge® Polyole der Fa. Novomer / Saudi Aramco, NEOSPOL Polyole der Fa. Repsol etc.) und/oder Polyetherestercarbonatpolyole ausgewählt sein. Insbesondere können Polyethercarbonatpolyole, Polycarbonatpolyole und/oder Polyetherestercarbonatpolyole durch Umsetzung von Alkylenoxiden, bevorzugt Ethylenoxid, Propylenoxid oder deren Mischungen, optional weiteren Co-Monomeren mit $CO_2$ in Gegenwart einer H-funktionellen Startersubstanz und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47(2011)141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyolen, Polycarbonatpolyolen und/oder Polyetherestercarbonatpolyolen. Diese Polyethercarbonatpolyole, Polycarbonatpoylole und/oder Polyetherestercarbonatpolyole können hierzu in einem separaten Reaktionsschritt zuvor hergestellt werden.

In einer bevorzugten Ausführungsform des erfindungsgemäßen Verfahrens ist das Polyoxyalkylenpolyol ein Polyetherpolyol und/oder Polyethercarbonatpolyol.

In einer Ausführungsform des erfindungsgemäßen Verfahrens ist das Polyoxyalkylenpolyol ein Polyetherpolyol, wobei das Polyetherpolyol eine zahlenmittlere Molmasse $\geq$ 1000 g/mol, bevorzugt $\geq$ 1500 g/mol und besonders bevorzugt $\geq$ 2000 g/mol aufweist.

In einer Ausführungsform des erfindungsgemäßen Verfahrens ist das Polyoxyalkylenpolyol ein Polyetherpolyol, wobei das Polyetherpolyol eine zahlenmittlere Molmasse von $\leq$ 30000 g/mol, bevorzugt $\leq$ 25000 g/mol und besonders bevorzugt $\leq$ 20000 g/mol aufweist.

In einer Ausführungsform des erfindungsgemäßen Verfahrens ist das Polyoxyalkylenpolyol ein Polyetherpolyol, wobei das Polyetherpolyol eine zahlenmittlere Molmasse von $\geq$ 1000 g/mol bis $\leq$ 30000 g/mol, bevorzugt $\geq$ 1500 g/mol bis $\leq$ 25000 g/mol und besonders bevorzugt $\geq$ 2000 g/mol bis $\leq$ 20000 g/mol aufweist.

In einer bevorzugten Ausführungsform des erfindungsgemäßen Verfahrens ist das Polyoxyalkylenpolyol ein Polyetherpolyol, wobei das Polyetherpolyol durch Umsetzung einer H-funktionellen Startersubstanz mit Alkylenoxiden in Gegenwart eines Doppelmetallcyanid-Katalysators hergestellt worden ist. Die nach Umsetzung mit dem Lacton erhaltenen Produkte werden im Folgenden als Polyetherpolyesterpolyole bezeichnet.

In einer Ausführungsform des erfindungsgemäßen Verfahrens ist das Polyoxyalkylenpolyol ein Polyethercarbonatpolyol, wobei das Polyethercarbonatpolyol eine zahlenmittlere Molmasse $\geq$ 1000 g/mol, bevorzugt $\geq$ 1500 g/mol und besonders bevorzugt $\geq$ 2000 g/mol aufweist.

In einer Ausführungsform des erfindungsgemäßen Verfahrens ist das Polyoxyalkylenpolyol ein Polyethercarbonatpolyol, wobei das Polyethercarbonatpolyol eine zahlenmittlere Molmasse von $\leq$ 30000 g/mol, bevorzugt $\leq$ 25000 g/mol und besonders bevorzugt $\leq$ 20000 g/mol aufweist.

In einer Ausführungsform des erfindungsgemäßen Verfahrens ist das Polyoxyalkylenpolyol ein Polyethercarbonatpolyol, wobei das Polyethercarbonatpolyol eine zahlenmittlere Molmasse von $\geq$ 1000 g/mol bis $\leq$ 30000 g/mol, bevorzugt $\geq$ 1500 g/mol bis $\leq$ 25000 g/mol und besonders bevorzugt $\geq$ 2000 g/mol bis $\leq$ 20000 g/mol aufweist.

In einer weiteren bevorzugten Ausführungsform des erfindungsgemäßen Verfahrens ist das Polyoxyalkylenpolyol ein Polyethercarbonatpolyol, wobei das Polyethercarbonatpolyol durch Umsetzung einer H-funktionellen Startersubstanz mit Alkylenoxiden und Kohlenstoffdioxid in Gegenwart eines Doppelmetallcyanid-Katalysators hergestellt worden ist. Die nach Umsetzung mit dem Lacton erhaltenen Produkte werden im Folgenden als Polyethercarbonatpolyesterpolyole bezeichnet.

Doppelmetallcyanid (DMC) -Katalysator

Die in dem erfindungsgemäßen Verfahren vorzugsweise einsetzbaren DMC-Katalysatoren enthalten Doppelmetallcyanid-Verbindungen, die die Reaktionsprodukte wasserlöslicher Metallsalze und wasserlöslicher Metallcyanidsalze sind.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyoxyalkylenpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(2.) wobei im zweiten Schritt der Feststoff aus der aus (1.) erhaltenen Suspension durch bekannte Techniken (wie Zentrifugation oder Filtration) abgetrennt wird,

(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (I) auf,

$$M(X)_n \qquad (I),$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat und

n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (II) auf,

$$M_r(X)_3 \qquad (II),$$

wobei

M ausgewählt ist aus den Metallkationen $Fe^{3+}$, $Al^{3+}$, $Co^{3+}$ und $Cr^{3+}$,

X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;

r ist 2, wenn X = Sulfat, Carbonat oder Oxalat und

r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (III) auf,

$$M(X)_s \qquad (III),$$

wobei

M ausgewählt ist aus den Metallkationen $Mo^{4+}$, $V^{4+}$ und $W^{4+}$,

X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat und

s ist 4, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (IV) auf,

$$M(X)t \qquad (IV),$$

wobei

M ausgewählt ist aus den Metallkationen $Mo^{6+}$ und $W^{6+}$,

X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat und

t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (V) auf

$$(Y)_a M'(CN)_b (A)_c \qquad (V),$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VI)

$$M_x[M'_{x'}(CN)_y]_z \qquad (VI),$$

worin M wie in den Formeln (I) bis (IV) und

M' wie in Formel (V) definiert ist, und

x, x', y und z ganzzahlig sind und so gewählt, dass die Elektronenneutralität der Doppelmetallcyanidverbindung gegeben ist.

Vorzugsweise ist

x = 3, x'= 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanid-Verbindungen (VI) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanocobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-coacrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische Oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung eine weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus organischen Komplexliganden und weiterer komplexbildender Komponente (bevorzugt im Bereich zwischen 0,5 und 5 Gew.-%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

H-funktionelle Startersubstanz

Als geeignete H-funktionelle Startersubstanz (Starter) können Verbindungen mit für die Alkoxylierung aktiven H-Atomen eingesetzt werden. Für die Alkoxylierung aktive Gruppen mit aktiven H-Atomen sind beispielsweise -OH, -SH und -CO$_2$H, bevorzugt ist -OH. Als H-funktionelle Startersubstanz können beispielsweise eine oder mehrere Verbindungen ausgewählt werden aus der Gruppe umfassend mehrwertige Alkohole, mehrwertige Thiole, Thioalkohole, Hydroxyester, Polyetherpolyole, Polyesterpolyole, Polyesteretherpolyole, Polyethercarbonatpolyole, Polycarbonatpolyole, Polycarbonate.

Als H-funktionelle Startersubstanzen geeignete mehrwertige Alkohole sind beispielsweise zweiwertige Alkohole (wie beispielsweise Ethylenglykol, Diethylenglykol, 1,2-Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol, 1,8-Octandiol, 1,10-Decandiol, 1,12-Dodecandiol, Bis-(hydroxymethyl)cyclohexane (wie beispielsweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 1000 g/mol. Bevorzugt sind Polyetherpolyole, die aus sich wiederholenden Ethylenoxid- und Propylenoxideinheiten aufgebaut sind, bevorzugt mit einem Anteil von 35 bis 100 % Propylenoxideinheiten, besonders bevorzugt mit einem Anteil von 50 bis 100 % Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (PET® 1004, PET® 1110N). Weitere geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 1000 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet.

Des Weiteren können als H-funktionelle Startersubstanzen Polycarbonatdiole eingesetzt werden, insbesondere solche mit einem Molekulargewicht $M_n$ im Bereich von 150 bis 1000 g/mol die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden.In einer weiteren Ausführungsform der Erfindung können Polyethercarbonatpolyole und/oder Polyetherestercarbonatpolyole als H-funktionelle Startersubstanzen eingesetzt werden.

Die H-funktionellen Startersubstanzen weisen im Allgemeinen eine OH-Funktionalität (d.h. Anzahl an für die Polymerisation aktiven H-Atomen pro Molekül) von 2 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Ethylenglycol, Propylenglykol, Diethylenglykol, Trimethylolpropan, Glycerin, Sorbit, Polyetherpolyole und Polyethercabonatpolyole.

In einer bevorzugten Ausführungsform des erfindungsgemäßen Verfahrens ist das Alkylenoxid Ethylenoxid und/oder Propylenoxid.

In einer bevorzugten Ausführungsform des erfindungsgemäßen Verfahrens ist der Gewichtsanteil des Propylenoxids 80 Gew.-% bis 100 Gew.-% bezogen auf die Summe der dosierten Massen des Propylenoxids und des Ethylenoxids.

Lacton

Unter Lactonen sind gemäß des technisch-allgemeingültig Verständnis in der organischen Chemie heterocyclische Verbindungen zu verstehen, die durch intramolekulare Veresterung, d.h. Umsetzung einer Hydroxyfunktionalität mit einer Carboxyfunktionalität einer Hydroxycarbonsäure, gebildet werden. Es handelt sich somit um cyclische Ester mit einem Ringsauerstoff.

Im erfindungsgemäßen Verfahren ist eine $CH_2$ Gruppe an den Ringsauerstoff im Lacton gebunden.

In einer bevorzugten Ausführungsform des erfindungsgemäßen Verfahrens ist das Lacton eine oder mehrere Verbindung(en) und wird ausgewählt aus der Gruppe bestehend aus beta-Propiolacton, gamma- Butyrolacton, delta-Valerolacton und epsilon-Caprolacton.

In einer besonders bevorzugten Ausführungsform des erfindungsgemäßen Verfahrens ist das Lacton beta-Propiolacton.

In einer bevorzugten Ausführungsform des erfindungsgemäßen Verfahrens beträgt das molare Verhältnis zwischen Lacton und den Hydroxyendgruppen des Polyoxyalkylenpolyols 1:1 bis 20:1, bevorzugt von 1,5:1 bis 10:1 und besonders bevorzugt von 2:1 bis 6:1.

Brönsted-saurer Katalysator

Gemäß der gängigen, fachlichen Definition sind unter Brönsted-Säuren Stoffe zu verstehen, welche Protonen an einen zweiten Reaktionspartner, die sogenannte Brönsted-Base übertragen können. Im Sinne der vorliegenden Erfindung bezeichnet der Begriff des Brönsted-sauren Katalysators eine nicht-polymere Verbindung, wobei der Brönsted-saure Katalysator eine berechnete Molmasse von ≤ 1200 g/mol, bevorzugt von ≤ 1000 g/mol und besonders bevorzugt von ≤ 850 g/mol aufweist.

Im erfindungsgemäßen Verfahren weist der Brönsted-saure Katalysator einen pKs-Wert von 1 oder kleiner, bevorzugt von kleiner gleich Null auf.

Der Brönsted-saure Katalysator ist beispielsweise ausgewählt aus einer oder mehreren Verbindung(en) der Gruppe bestehend aus aliphatischen fluorierten Sulfonsäuren, aromatischen fluorierten Sulfonsäuren, Trifluormethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclopentadien, Pikrinsäure, Schwefelsäure, Salpetersäure, Trifluoressigsäure, Trichloressigsäure, Methansulfonsäure, Paratoluolsulfonsäure, aromatische Sulfonsäuren und aliphatische Sulfonsäuren.

In einer bevorzugten Ausführungsform des erfindungsgemäßen Verfahrens ist der Brönsted-saure Katalysator eine oder mehrere Verbindung(en) ausgewählt aus der Gruppe bestehend aus Trifluormethansulfonsäure, Perchlorsäure, Chlorwasserstoffsäure, Bromwasserstoffsäure, Jodwasserstoffsäure, , Schwefelsäure, Salpetersäure, Methansulfonsäure, Trichloressigsäure und Trifluoressigsäure. Besonders bevorzugt wird als Brönsted-saurer Katalysator Trifluormethansulfonsäure eingesetzt.

In einer Ausführungsform des erfindungsgemäßen Verfahrens wird der Brönsted-saure Katalysator in einer Menge von 0,001 mol-% bis 0,5 mol-%, bevorzugt von 0,003 bis 0,4 mol-% und besonders bevorzugt von 0,005 bis 0,3 mol-% bezogen auf die Menge an Lacton eingesetzt.

Lösungsmittel

Gemäß der gängigen, fachlichen Definition ist unter einem Lösungsmittel eine oder mehrere Verbindung(en) zu verstehen, die das Lacton oder das Polyoxyalkylenpolyol und/oder den Brönsted-sauren Katalysator lösen ohne jedoch selbst mit dem Lacton, dem Polyoxyalkylenpolyol und/oder dem Brönsted-sauren Katalysator zu reagieren.

In einer Ausführungsform wird das erfindungsgemäße Verfahren ohne Zusatz eines Lösungsmittels durchgeführt, so dass dieses nach der Herstellung des Polyoxyalkylenpolyesterpolyols nicht in einem zusätzlichen Verfahrensschritt abgetrennt werden muss.

In einer Ausführungsform des erfindungsgemäßen Verfahrens wird die Umsetzung des Polyoxyalkylenpolyols mit dem Lacton in Gegenwart des Brönsted-sauren Katalysators bei Temperaturen von 20 bis 160°C, bevorzugt von 40 bis 120°C und besonders bevorzugt von 50 bis 110°C durchgeführt.

In einer Ausführungsform des erfindungsgemäßen Verfahrens wird das Lacton kontinuierlich oder stufenweise zu der Mischung aus Polyoxyalkylenpolyol und Brönsted-saurem Katalysator zugegeben und zum Polyoxyalkylenpolyesterpolyol umgesetzt (semi-batch Modus).

Im erfindungsgemäßen Verfahren ist unter einer kontinuierlichen Zugabe des Lactons ein Volumenstrom des Lactons von > 0 mL/min zu verstehen, wobei der Volumenstrom während dieses Schrittes konstant sein kann oder variiert (kontinuierliche Lactonzugabe).

In einer alternativen Ausführungsform des erfindungsgemäßen Verfahrens wird das Lacton stufenweise zur Mischung aus Polyoxyalkylenpolyol und Brönsted-saurem Katalysator zugegeben und anschließend zum Polyoxyalkylenpolyesterpolyol umgesetzt (stufenweise Lactonzugabe).

Im erfindungsgemäßen Verfahren ist unter einer stufenweisen Zugabe des Lactons mindestens die Zugabe der gesamten Lactonmenge in zwei oder mehr diskreten Portionen des Lactons zu verstehen, wobei der Volumenstrom des Lactons zwischen den zwei oder mehr diskreten Portionen 0 mL/min beträgt und wobei der Volumenstrom des Lactons während einer diskreten Portion konstant sein kann oder variiert, aber > 0 mL/min ist.

In einer alternativen Ausführungsform wird das Polyoxyalkylenpolyol, das Lacton und der Brönsted-saure Katalysator gemischt und anschließend die gesamte Mischung zum Polyoxyalkylenpolyesterpolyol umgesetzt (batch-Modus).

In einer weiteren, alternativen Ausführungsform werden das Polyoxyalkylenpolyol, das Lacton und der Brönsted-saure Katalysator kontinuierlich vermischt und miteinander zur Reaktion gebracht, während kontinuierlich das Polyoxyalkylenpolyesterpolyol Produkt abgeführt wird, beispielsweise in einem Rohrreaktor oder einem kontinuierlichen Rührkesselreaktor (engl. continous stirred tank reactor), was einem vollkontinuierlichen Herstellungsverfahren für das Polyoxyalkylenpolyesterpolyol entspricht (conti-Modus).

Ein weiterer Gegenstand der vorliegenden Erfindung sind Polyoxyalkylenpolyesterpolyole, bevorzugt Polyetherpolyesterpolyol und/oder Polyethercarbonatpolyesterpolyol erhältlich nach dem erfindungsgemäßen Verfahren, wobei das Polyoxyalkylenpolyesterpolyol einen Anteil von mindestens 80 % primären OH-Endgruppen bezogen auf die Summe aus primären und sekundären OH-Endgruppen aufweist, wobei die primären OH-Endgruppen mittels der im Experimentalteil offenbarten $^1$H- oder $^{13}$C-NMR-Spektroskopie bestimmt worden sind.

In einer Ausführungsform weist das erfindungsgemäße Polyoxyalkylenpolyesterpolyol, bevorzugt Polyetherpolyesterpolyol und/oder Polyethercarbonatpolyesterpolyol einen Polydispersitätsindex von $\leq 1,20$, bevorzugt $\leq 1,15$ auf, wobei der Polydispersitätsindex mittels der in der Beschreibung offenbarten Gel-Permeations-Chromatographie bestimmt wurde.

Ein weiterer Gegenstand der vorliegenden Erfindung ist ein Verfahren zur Herstellung eines Polyurethans durch Umsetzung des erfindungsgemäßen Polyoxyalkylenpolyesterpolyols, bevorzugt des Polyetherpolyesterpolyols und/oder des Polyethercarbonatpolyesterpolyols mit einem Polyisocyanat.

Das Polyisocyanat kann ein aliphatisches oder aromatisches Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

In einer ersten Ausführungsform betrifft die Erfindung ein Verfahren zur Herstellung eines Polyoxyalkylenpolyesterpolyols durch Umsetzung eines Polyoxyalkylenpolyols mit einem Lacton in Gegenwart eines Brönsted-sauren Katalysators, wobei der Katalysator einen pKs-Wert von 1 oder kleiner aufweist, wobei die zahlenmittlere Molmasse des Polyoxyalkylenpolyols $\geq$ 1000 g/mol, bevorzugt $\geq$ 1500 g/mol, besonders bevorzugt $\geq$ 2000 g/mol beträgt und wobei im Lacton eine CH2 Gruppe an den Ringsauerstoff gebunden ist.

In einer zweiten Ausführungsform betrifft die Erfindung ein Verfahren gemäß der ersten Ausführungsform, wobei das Lacton eine oder mehrere Verbindungen ist und ausgewählt wird aus der Gruppe bestehend aus beta-Propiolacton, gamma-Butyrolacton, delta-Valerolacton und epsilon-Caprolacton, bevorzugt beta-Propiolacton.

In einer dritten Ausführungsform betrifft die Erfindung ein Verfahren gemäß der ersten oder zweiten Ausführungsform, wobei das molare Verhältnis zwischen Lacton und den Hydroxyendgruppen des Polyoxyalkylenpolyols 1:1 bis 20:1, bevorzugt von 1,5:1 bis 10:1 und besonders bevorzugt von 2:1 bis 6:1 beträgt.

In einer vierten Ausführungsform betrifft die Erfindung ein Verfahren gemäß einer der ersten bis dritten Ausführungsform, wobei wobei der Brönsted-saure Katalysator eine oder mehrere Verbindungen ist und ausgewählt wird aus der Gruppe bestehend aus Trifluormethansulfonsäure, Perchlorsäure, Chlorwasserstoffsäure, Bromwasserstoffsäure, Jodwasserstoffsäure , Schwefelsäure, Salpetersäure, Methansulfonsäure, Trichloressigsäure und Trifluoressigsäure, bevorzugt Trifluormethansulfonsäure.

In einer fünften Ausführungsform betrifft die Erfindung ein Verfahren gemäß der ersten bis vierten Ausführungsform, wobei der Brönsted-saure Katalysator in einer Menge von 0,001 mol-% bis 0,5 mol-%, bevorzugt von 0,003 bis 0,4 mol-% und besonders bevorzugt von 0,005 bis 0,3 mol-% bezogen auf die Menge an Lacton eingesetzt wird.

In einer sechsten Ausführungsform betrifft die Erfindung ein Verfahren gemäß der ersten bis sechsten Ausführungsform, wobei das Polyoxyalkylenpolyol einen Anteil von mindestens 75 % sekundären OH-Endgruppen bezogen auf die Summe aus primären und sekundären OH-Endgruppen aufweist, wobei die sekundären OH-Endgruppen mittels der im Experimentalteil offenbarten 1H-NMR-Spektroskopie bestimmt worden sind.

In einer siebten Ausführungsform betrifft die Erfindung ein Verfahren gemäß einer der ersten bis sechsten Ausführungsform, wobei das Polyoxyalkylenpolyol ein Polyetherpolyol und/oder Polyethercarbonatpolyol ist.

In einer achten Ausführungsform betrifft die Erfindung ein Verfahren gemäß der siebten Ausführungsform, wobei das Polyoxyalkylenpolyol ein Polyetherpolyol ist und das Polyetherpolyol durch Umsetzung einer H-funktionellen Startersubstanz mit Alkylenoxiden in Gegenwart eines Doppelmetallcyanid-Katalysators hergestellt worden ist.

In einer neunten Ausführungsform betrifft die Erfindung ein Verfahren gemäß der siebten Ausführungsform, wobei das Polyoxyalkylenpolyol ein Polyethercarbonatpolyol ist und das Polyethercarbonatpolyol durch Umsetzung einer H-funktionellen Startersubstanz mit Alkylenoxiden und Kohlenstoffdioxid in Gegenwart eines Doppelmetallcyanid-Katalysators hergestellt worden ist.

In einer zehnten Ausführungsform betrifft die Erfindung ein Verfahren gemäß einer der achten oder neunten Ausführungsform, wobei das Alkylenoxid Ethylenoxid und/oder Propylenoxid ist.

In einer elften Ausführungsform betrifft die Erfindung ein Verfahren gemäß der zehnten Ausführungsform, wobei der Gewichtsanteil des Propylenoxids 80 Gew.-% bis 100 Gew.-% bezogen auf die Summe der dosierten Massen des Propylenoxids und des Ethylenoxids ist.

In einer zwölften Ausführungsform betrifft die Erfindung ein Verfahren gemäß einer der ersten bis zehnten Ausführungsform, wobei das Verfahren ohne Zusatz eines Lösungsmittels durchgeführt wird.

In einer dreizehnten Ausführungsform betrifft die Erfindung ein Polyoxyalkylenpolyesterpolyol, bevorzugt Polyetherpolyesterpolyol und/oder Polyethercarbonatpolyesterpolyol erhältlich nach einer der ersten bis zwölften Ausführungsform wobei das Polyoxyalkylenpolyesterpolyol einen Anteil von mindestens 80 % primären OH-Endgruppen bezogen auf die Summe aus primären und sekundären OH-Endgruppen aufweist, wobei die primären OH-Endgruppen mittels der im Experimentalteil offenbarten 1H- oder 13C-NMR-Spektroskopie bestimmt worden sind.

In einer vierzehnten Ausführungsform betrifft die Erfindung ein Polyoxyalkylenpolyesterpolyol, bevorzugt Polyetherpolyesterpolyol und/oder Polyethercarbonatpolyesterpolyol gemäß der dreizehnten Ausführungsform, wobei das Polyoxyalkylenpolyesterpolyol einen Polydispersitätsindex von ≤1,20 bevorzugt, ≤1,15 aufweist, wobei der Polydispersitätsindex mittels der im Experimentalteil offenbarten Gel-Permeations-Chromatographie bestimmt worden ist.

In einer fünfzehnten Ausführungsform betrifft die Erfindung ein Verfahren zur Herstellung eines Polyurethans durch Umsetzung des Polyoxyalkylenpolyesterpolyols, bevorzugt des Polyetherpolyesterpolyols und/oder des Polyethercarbonatpolyesterpolyols gemäß der dreizehnten oder vierzehnten Ausführungsform mit einem Polyisocyanat.

**Beispiele**

Die vorliegende Erfindung wird anhand der nachfolgenden Figuren und Beispiele näher erläutert, ohne jedoch darauf beschränkt zu sein.

*Verwendete Ausgangsstoffe*

cyclische Lactone

β-Propiolacton (Reinheit < 98 %, Acros Organics BVBA)

Katalysatoren

Trifluormethansulfonsäure (Reinheit < 99 %, Acros Organics)
DMC - Katalysator hergestellt gemäß Beispiel 6 in WO 01/80994 A1

Polyoxyalkylenpolyol (Polyetherpolyol)

Die Herstellung des Polyetherpolyols A erfolgte mittels DMC-Katalyse wie folgt:
In einem 20 L Druckreaktor wurden 1739,3 g eines Poly(oxypropylen)triols mit einer OH-Zahl von 233 mg KOH/g sowie 0,367 g DMC-Katalysator (hergestellt gemäß Beispiel 6 in WO 01/80994 A1) unter Stickstoff vorgelegt. Der Reaktor wurde auf 130°C aufgeheizt, durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde bei 130°C innerhalb von drei Stunden ein Gemisch von 9256 g Propylenoxid und 1028 g Ethylenoxid zudosiert. Nach einer Nachreaktionszeit bei 130°C bis zur Druckkonstanz im Reaktor wurden leichtflüchtige Anteile bei 90°C für 30 min im Vakuum abdestilliert und das Reaktionsgemisch anschließend auf Raumtemperatur abgekühlt. Die OH-Zahl des Produktes lag bei 34,3 mg KOH/g, das Zahlenmittel $M_n$ des Molekulargewichts bei 6665 g/mol, die Polydispersität bei 1,03 und der Anteil primärer Hydroxyendgruppen bei 18 %.

*Beschreibung der Methoden:*

Gel-Permeations-Chromatographie (GPC):

Das Zahlenmittel $M_n$ und das Gewichtsmittel $M_w$ des Molekulargewichts sowie die Polydispersität ($M_w/M_n$) der Produkte wurde mittels Gel-Permeations-Chromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2xPSS SDV linear M, 8x300 mm, 5$\mu$m; RID-Detektor). Dabei wurden Polystyrolproben bekannter Molmasse zur Kalibrierung verwendet.

$^1$H- und $^{13}$C-NMR-Spektroskopie

Bestimmung des molaren Anteils der primären OH-Gruppen: mittels $^1$H- (Bruker AV III HD 600, 600 MHz, Deuterochloroform) oder $^{13}$C-NMR (Bruker AV III HD 600, 151 MHz, Deuterochloroform):
Zur Bestimmung des Gehaltes an primären OH-Gruppen wurden die Polyol-Proben zunächst peracetyliert.
Dabei wurde folgendes Peracetylierungsgemisch angesetzt:

9,4 g Essigsäureanhydrid p.A.
1,6 g Essigsäure p.A.
100 mL Pyridin p.A.

Für die Peracetylierungsreaktion wurden 10 g Polyol (Polyoxyalkylenpolyol oder Polyoxyalkylenpolyesterpolyol) in einem 300 mL-Schlifferlenmeyerkolben eingewogen. Das Volumen an Peracetylierungsgemisch richtete sich nach der OH-Zahl des zu peracetylierenden Polyols, wobei (jeweils bezogen auf 10 g Polyol) die OH-Zahl des Polyols aufgerundet wird auf die nächste 10er-Stelle; Pro 10 mg KOH/g werden dann 10 mL an Peracetylierungsgemisch zugesetzt. Beispielsweise wurden der Probe von 10 g eines Polyols mit einer OH-Zahl von 45,1 mg KOH/g entsprechend 50 mL Peracetylierungsgemisch zugesetzt.
Nach der Zugabe von Siedeperlen aus Glas wurde der Schlifferlenmeyerkolben mit einem Steigrohr (Luftkühler) versehen und die Probe 75 min bei schwachem Rückfluss gekocht. Das Probengemisch wurde dann in einen 500 mL-Rundkolben überführt und über einen Zeitraum von 30 min bei 80°C und 10 mbar (absolut) wurden flüchtige Bestandteile (im wesentlichen Pyridin, Essigsäure und überschüssiges Essigsäureanhydrid) abdestilliert. Der Destillationsrückstand wurde anschließend dreimal mit je 100 ml Cylcohexan (alternativ wurde Toluol eingesetzt in den Fällen, in denen sich der Destillationsrückstand in Cylcohexan nicht löste) versetzt und flüchtige Bestandteile der Probe eine Stunde bei 100°C und 10 mbar (absolut) entfernt.
Zur Bestimmung der molaren Anteile an primären und sekundären OH-Endgruppen im Polyol wurde die so vorbereitete Probe in deuteriertem Chloroform gelöst und mittels $^1$H-NMR (Firma Bruker AV III HD 600, 600 MHz) oder $^{13}$C-NMR (Firma Bruker AV III HD 600, 151 MHz) untersucht. Die relevanten Resonanzen im $^1$H-NMR (bezogen auf TMS = 0 ppm) sind wie folgt: Methylsignal einer peracetylierten sekundären OH-Endgruppe: 2.04 ppm
Methylsignal einer peracetylierten primären OH-Endgruppe: 2.07 ppm
Der molare Anteil der sekundären und primären OH-Endgruppen ergibt sich dann wie folgt:

$$\text{Anteil sekundärer OH-Endgruppen (CH-OH)} = F\,(2.04) / (F\,(2.04) + F\,(2.07)) * 100\,\% \qquad \text{(VII)}$$

$$\text{Anteil primärer OH-Endgruppen (CH}_2\text{-OH)} = F\,(2.07) / (F\,(2.04) + F\,(2.07)) * 100\,\% \qquad \text{(VIII)}$$

In den Formeln (VII) und (VIII) steht F für die Fläche der Resonanz bei 2.04 ppm bzw. 2.07 ppm.
Die relevanten Resonanzen im $^{13}$C-NMR (bezogen auf TMS = 0 ppm) sind wie folgt: Methylsignal einer peracetylierten sekundären OH-Endgruppe: 21.3 ppm
Methylsignal einer peracetylierten primären OH-Endgruppe: 20.8 ppm

Der molare Anteil der sekundären und primären OH-Endgruppen ergibt sich dann wie folgt:

$$\text{Anteil sekundärer OH-Endgruppen (CH-OH)} = F\,(21.3)\,/\,(F\,(21.3) + F\,(20.8)) * 100\,\% \qquad (IX)$$

$$\text{Anteil primärer OH-Endgruppen (CH}_2\text{-OH)} = F\,(20.8)\,/\,(F\,(21.3) + F\,(20.8)) * 100\,\% \qquad (X)$$

In den Formeln (IX) und (X) steht F für die Fläche der Resonanz bei 21.3 ppm bzw. 20.8 ppm.

Infrarotspektroskopie

Der prozentuale Lactonumsatz bezogen auf die eingesetzte Menge an Lacton wurde mittels IR-Spektroskopie bestimmt. Dazu wurde die Produkt-Carbonylbande untersucht ($1740\ cm^{-1}$). Als Referenz diente jeweils die Produkt-Carbonylbande einer Probe mit gleichem molarem Lacton / Hydroxyendgruppen-Verhältnis bei der keine charakteristischen Lacton-Edukt-Banden (z.B. beta-Propiolacton Edukt-Carbonylbanden $1802\ cm^{-1}$, $1824\ cm^{-1}$) beobachtet wurden und deren Lactonumsatz somit auf 100 % gesetzt wurde.
Der prozentuale Lactonumsatz ergibt sich dann wie folgt:

$$X(\text{Lacton})\,[\%] = F\,(1740)\,/\,F_{\text{ref}}\,(1740) * 100\,\% \qquad (XI)$$

In der Formel (XI) steht F für die Fläche der Produkt-Carbonylbande bei $1740\ cm^{-1}$ und $F_{\text{ref}}$ für die Fläche der Produkt-Carbonylbande bei $1740\ cm^{-1}$ einer Referenzprobe mit gleichem Lacton / Hydroxyendgruppen-Verhältnis und vollständigem Lactonumsatz.

OH-Zahlen

Die Bestimmung der OH-Zahlen erfolgte gemäß der Vorschrift der DIN 53240.

**Beispiel 1:**

In einem 2-Liter Edelstahlreaktor wurden 170 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 60°C abgekühlt und mit Stickstoff ein Reaktordruck von 1 bar (absolut) eingestellt. Bei 60°C wurde zunächst ein Gemisch aus 10 g des Polyetherpolyols A und 0,03 g Trifluormethansulfonsäure (0,08 mol-% bezogen auf die Gesamtmenge des eingesetzten Lactons) und anschließend 5 g beta-Propiolacton hinzugegeben. Das Reaktionsgemisch wurde 2 Stunden bei 60°C gerührt. Anschließend wurde in einem Abstand von 15 Minuten beta-Propiolacton in Portionen von 5 g (bzw. letzte Portion: 5,9 g) hinzugegeben (Gesamtmenge beta-Propiolacton: 15,9 g; molares Verhältnis Lacton / Hydroxyendgrupen des Polyetherpolyols A: 2 / 1). Nach vollständiger Lacton-Zugabe wurde das Reaktionsgemisch 30 min bei 60°C gerührt und anschließend auf Raumtemperatur abgekühlt. Per IR-Spektroskopie wurde ein Lactonumsatz von 80 % bestimmt. Das Zahlenmittel $M_n$ des Molekulargewichts des Produkts beträgt 7424 g/mol, die Polydispersität 1,11 und der Anteil primärer Hydroxyendgruppen 85 %.

**Beispiel 2:**

In einem 2-Liter Edelstahlreaktor wurden 170 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 60°C abgekühlt und mit Stickstoff ein Reaktordruck von 1 bar (absolut) eingestellt. Bei 60°C wurde zunächst ein Gemisch aus 10 g des Polyetherpolyols A und 0,04 g Trifluormethansulfonsäure (0,08 mol-% bezogen auf die Gesamtmenge des eingesetzten Lactons) und anschließend 5 g beta-Propiolacton hinzugegeben. Das Reaktionsgemisch wurde 2 Stunden bei 60°C gerührt. Anschließend wurde in einem Abstand von 15 Minuten beta-Propiolacton in Portionen von 5 g (bzw. letzte Portion: 6,2 g) hinzugegeben (Gesamtmenge beta-Propiolacton: 26,2 g; molares Verhältnis Lacton / Hydroxyendgrupen des Polyetherpolyols A: 3,3 / 1). Nach vollständiger Lacton-Zugabe wurde das Reaktionsgemisch 30 min bei 60°C gerührt und anschließend auf Raumtemperatur abgekühlt. Per IR-Spektroskopie wurde ein Lactonumsatz von 95 % bestimmt. Das Zahlenmittel $M_n$ des Molekulargewichts des Produkts beträgt 7782 g/mol, die Polydispersität 1,10 und der Anteil primärer Hydroxyendgruppen 89 %.

**Beispiel 3:**

In einem 2-Liter Edelstahlreaktor wurden 170 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 60°C abgekühlt und mit Stickstoff ein Reaktordruck von 1 bar (absolut) eingestellt. Bei 60°C wurde zunächst ein Gemisch aus 10 g des Polyetherpolyols A und 0,05 g Trifluormethansulfonsäure (0,08 mol-% bezogen auf die Gesamtmenge des eingesetzten Lactons) und anschließend 5 g beta-Propiolacton hinzugegeben. Das Reaktionsgemisch wurde 2 Stunden bei 60°C gerührt. Anschließend wurde in einem Abstand von 15 Minuten beta-Propiolacton in Portionen von 5 g (bzw. letzte Portion: 6,7 g) hinzugegeben (Gesamtmenge beta-Propiolacton: 31,7 g; molares Verhältnis Lacton / Hydroxyendgrupen des Polyetherpolyols A: 4 / 1). Nach vollständiger Lacton-Zugabe wurde das Reaktionsgemisch 30 min bei 60°C gerührt und anschließend auf Raumtemperatur abgekühlt. Per IR-Spektroskopie wurde ein Lactonumsatz von 100 % bestimmt. Das Zahlenmittel $M_n$ des Molekulargewichts des Produkts beträgt 8071 g/mol, die Polydispersität 1,11 und der Anteil primärer Hydroxyendgruppen 96 %.

**Beispiel 4:**

In einem 2-Liter Edelstahlreaktor wurden 170 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 60°C abgekühlt und mit Stickstoff ein Reaktordruck von 1 bar (absolut) eingestellt. Bei 60°C wurde zunächst ein Gemisch aus 10 g des Polyetherpolyols A und 0,05 g Trifluormethansulfonsäure (0,08 mol-% bezogen auf die Gesamtmenge des eingesetzten Lactons) und anschließend 5 g beta-Propiolacton hinzugegeben. Das Reaktionsgemisch wurde 2 Stunden bei 60°C gerührt. Anschließend wurde in einem Abstand von 1 Stunde beta-Propiolacton in Portionen von 5 g (bzw. letzte Portion: 6,7 g) hinzugegeben (Gesamtmenge beta-Propiolacton: 31,7 g; molares Verhältnis Lacton / Hydroxyendgrupen des Polyetherpolyols A: 4 / 1). Nach vollständiger Lacton-Zugabe wurde das Reaktionsgemisch 30 min bei 60°C gerührt und anschließend auf Raumtemperatur abgekühlt. Per IR-Spektroskopie wurde ein Lactonumsatz von 100 % bestimmt. Das Zahlenmittel $M_n$ des Molekulargewichts des Produkts beträgt 8083 g/mol, die Polydispersität 1,10 und der Anteil primärer Hydroxyendgruppen 82 %.

**Beispiel 5:**

In einem 2-Liter Edelstahlreaktor wurden 170 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 60°C abgekühlt und mit Stickstoff ein Reaktordruck von 1 bar (absolut) eingestellt. Bei 60°C wurde zunächst ein Gemisch aus 10 g des Polyetherpolyols A und 0,17 g Trifluormethansulfonsäure (0,25 mol-% bezogen auf die Gesamtmenge des eingesetzten Lactons) und anschließend 5 g beta-Propiolacton hinzugegeben. Das Reaktionsgemisch wurde 2 Stunden bei 60°C gerührt. Anschließend wurde in einem Abstand von 1 Stunde beta-Propiolacton in Portionen von 5 g (bzw. letzte Portion: 6,7 g) hinzugegeben (Gesamtmenge beta-Propiolacton: 31,7 g; molares Verhältnis Lacton / Hydroxyendgrupen des Polyetherpolyols A: 4 / 1). Nach vollständiger Lacton-Zugabe wurde das Reaktionsgemisch 30 min bei 60°C gerührt und anschließend auf Raumtemperatur abgekühlt. Per IR-Spektroskopie wurde ein Lactonumsatz von 100 % bestimmt. Das Zahlenmittel $M_n$ des Molekulargewichts des Produkts beträgt 7696 g/mol, die Polydispersität 1,05 und der Anteil primärer Hydroxyendgruppen 93 %.

**Beispiel 6:**

In einem 2-Liter Edelstahlreaktor wurden 170 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 100°C abgekühlt und mit Stickstoff ein Reaktordruck von 1 bar (absolut) eingestellt. Bei 100°C wurde zunächst ein Gemisch aus 10 g des Polyetherpolyols A und 0,05 g Trifluormethansulfonsäure (0,08 mol-% bezogen auf die Gesamtmenge des eingesetzten Lactons) und anschließend 5 g beta-Propiolacton hinzugegeben. Das Reaktionsgemisch wurde 2 Stunden bei 100°C gerührt. Anschließend wurde in einem Abstand von 15 min beta-Propiolacton in Portionen von 5 g (bzw. letzte Portion: 6,7 g) hinzugegeben (Gesamtmenge beta-Propiolacton: 31,7 g; molares Verhältnis Lacton / Hydroxyendgrupen des Polyetherpolyols A: 4 / 1). Nach vollständiger Lacton-Zugabe wurde das Reaktionsgemisch 30 min bei 100°C gerührt und anschließend auf Raumtemperatur abgekühlt. Per IR-Spektroskopie wurde ein Lactonumsatz von 100 % bestimmt. Das Zahlenmittel $M_n$ des Molekulargewichts des Produkts beträgt 8374 g/mol, die Polydispersität 1,14 und der Anteil primärer Hydroxyendgruppen 85 %.

**Beispiel 7:**

In einem 2-Liter Edelstahlreaktor wurden 170 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 60°C abgekühlt und mit Stickstoff ein Reaktordruck von 1 bar (absolut) eingestellt. Bei 60°C wurde zunächst ein Gemisch aus 10 g des Polyetherpolyols A und 0,05 g Trifluormethansulfonsäure (0,08 mol-% bezogen auf die Gesamtmenge des eingesetzten Lactons) und anschließend 31,7 g beta-Propiolacton (entspricht der Gesamtmenge an beta-Propiolacton; molares Verhältnis Lacton / Hydroxyendgrupen des Polyetherpolyols A: 4 / 1) hinzugegeben. Das Reaktionsgemisch wurde 2 Stunden bei 60°C gerührt und anschließend auf Raumtemperatur abgekühlt. Per IR-Spektroskopie wurde ein Lactonumsatz von 94 % bestimmt. Das Zahlenmittel $M_n$ des Molekulargewichts des Produkts beträgt 8133 g/mol, die Polydispersität 1,10 und der Anteil primärer Hydroxyendgruppen 85 %.

**Beispiel 8:**

In einem 500 ml Dreihalsrundkolben wurden 180 g des Polyetherpolyols A vorgelegt, auf 60°C erwärmt und 0,05 g Trifluormethansulfonsäure (0,08 mol-% bezogen auf die Gesamtmenge des eingesetzten Lactons) hinzugegeben. Anschließend wurden kontinuierlich über einen Zeitraum von 45 min 31,7 g beta-Propiolacton (entspricht der Gesamtmenge an beta-Propiolacton; molares Verhältnis Lacton / Hydroxyendgrupen des Polyetherpolyols A: 4 / 1) hinzugegeben. Nach vollständiger Lacton-Zugabe wurde das Reaktionsgemisch 75 min bei 60°C gerührt und anschließend auf Raumtemperatur abgekühlt. Per IR-Spektroskopie wurde ein Lactonumsatz von 97 % bestimmt. Das Zahlenmittel $M_n$ des Molekulargewichts des Produkts beträgt 8113 g/mol, die Polydispersität 1,11 und der Anteil primärer Hydroxyendgruppen 80 %.

**Beispiel 9 (Vergleichsbeispiel):**

In einem 2-Liter Edelstahlreaktor wurden 200 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 100°C abgekühlt und mit Stickstoff ein Reaktordruck von 1 bar (absolut) eingestellt. Es wurden 5 g beta-Propiolacton hinzugegeben und das Reaktionsgemisch wurde 2 Stunden bei 100°C gerührt. Anschließend wurde in einem Abstand von 15 min beta-Propiolacton in Portionen von 5 g (bzw. letzte Portion: 5,3 g) hinzugegeben (Gesamtmenge beta-Propiolacton: 35,3 g; molares Verhältnis Lacton / Hydroxyendgrupen des Polyetherpolyols A: 4 / 1). Nach vollständiger Lacton-Zugabe wurde das Reaktionsgemisch 30 min bei 100°C gerührt und anschließend auf Raumtemperatur abgekühlt. Per IR-Spektroskopie wurde ein Lactonumsatz von 4% bestimmt. Das Zahlenmittel $M_n$ des Molekulargewichts des Produkts beträgt 6721 g/mol, die Polydispersität 1,03 und der Anteil primärer Hydroxyendgruppen 31 %.

**Beispiel 10 (Vergleichsbeispiel):**

In einem 2-Liter Edelstahlreaktor wurden 200 g des Polyetherpolyols A sowie 0,18 g DMC-Katalysator (hergestellt gemäß Beispiel 6 in WO 01/80994 A1) vorgelegt und auf 130°C erhitzt. Der Reaktor wurde durch dreimalige Evakuierung auf 100 mbar (absolut) und wiederholtes Beaufschlagen von Stickstoff inertisiert und dann für 30 min bei 100 mbar und 130°C unter Durchleiten von Stickstoff gestrippt. Anschließend wurde auf 100°C abgekühlt und mit Stickstoff ein Reaktordruck von 1 bar (absolut) eingestellt. Es wurden 5 g beta-Propiolacton hinzugegeben und das Reaktionsgemisch wurde 2 Stunden bei 100°C gerührt. Anschließend wurde in einem Abstand von 15 min beta-Propiolacton in Portionen von 5 g (bzw. letzte Portion: 5,3 g) hinzugegeben (Gesamtmenge beta-Propiolacton: 35,3 g; molares Verhältnis Lacton / Hydroxyendgrupen des Polyetherpolyols A: 4 / 1). Nach vollständiger Lacton-Zugabe wurde das Reaktionsgemisch 30 min bei 100°C gerührt und anschließend auf Raumtemperatur abgekühlt. Per IR-Spektroskopie wurde ein Lactonumsatz von 5 % bestimmt. Das Zahlenmittel $M_n$ des Molekulargewichts des Produkts beträgt 6666 g/mol, die Polydispersität 1,02 und der Anteil primärer Hydroxyendgruppen 28 %.

Tabelle 1: Vergleich der Versuche 1 bis 10.

| Versuch | Zugabe Lacton[a) | Lacton[b) | Polyoxyalkylenpolyol | Katalysator[c) | x (Kat) [mol-%][d) | Lacton/ Hydroxyendgruppen des Polyoxyalkylenpolyols [mol/mol] | T [°C] | X (Lacton) [%] | Primäre OH-Endgruppen [%] | Mn [g/mol] | PDI |
|---|---|---|---|---|---|---|---|---|---|---|---|
| 1 | sw | PL | Polyetherpolyol A | TfOH | 0,08 | 2/1 | 60 | 80 | 85 | 7424 | 1,11 |
| 2 | sw | PL | Polyetherpolyol A | TfOH | 0,08 | 3,3/1 | 60 | 95 | 89 | 7782 | 1,10 |
| 3 | sw | PL | Polyetherpolyol A | TfOH | 0,08 | 4/1 | 60 | 100 | 96 | 8071 | 1,11 |
| 4 | sw | PL | Polyetherpolyol A | TfOH | 0,08 | 4/1 | 60 | 100 | 82 | 8083 | 1,10 |
| 5 | sw | PL | Polyetherpolyol A | TfOH | 0,25 | 4/1 | 60 | 100 | 93 | 7696 | 1,05 |
| 6 | sw | PL | Polyetherpolyol A | TfOH | 0,08 | 4/1 | 100 | 100 | 85 | 8374 | 1,14 |
| 7 | batch | PL | Polyetherpolyol A | TfOH | 0,08 | 4/1 | 60 | 94 | 85 | 8133 | 1,10 |
| 8 | conti | PL | Polyetherpolyol A | TfOH | 0,08 | 4/1 | 60 | 97 | 80 | 8113 | 1,11 |
| 9 (Vgl.) | sw | PL | Polyetherpolyol A | DMCakt | - | 4/1 | 100 | 4 | 31 | 6721 | 1,03 |
| 10 (Vgl.) | sw | PL | Polyetherpolyol A | DMC$_{akt}$+ DMC$_{frisch}$ | - | 4/1 | 100 | 5 | 28 | 6666 | 1,02 |

a) Lactonzugabe: semi-batch Modus mit stufenweiser Lactonzugabe (sw); batch-Modus (batch); semi-batch Modus mit kontinuierlicher Lactonzugabe (conti) b) beta-Propiolacton (PL) c) Trifluormethansulfonsäure (TfOH); aus der Herstellung des Polyetherpolyols A enthaltener DMC-Katalysator (DMC$_{akt}$); zum Polyetherpolyol A hinzugegebener DMC-Katalysator (DMC$_{frisch}$)

d) bezogen auf die eingesetzte Menge Lacton

**Patentansprüche**

1. Verfahren zur Herstellung eines Polyoxyalkylenpolyesterpolyols durch Umsetzung eines Polyoxyalkylenpolyols mit einem Lacton in Gegenwart eines Brönsted-sauren Katalysators; wobei der Katalysator einen pKs-Wert von 1 oder kleiner aufweist; wobei die zahlenmittlere Molmasse des Polyoxyalkylenpolyols $\geq$ 1000 g/mol, bevorzugt $\geq$ 1500 g/mol, besonders bevorzugt $\geq$ 2000 g/mol beträgt; und wobei im Lacton eine $CH_2$ Gruppe an den Ringsauerstoff gebunden ist.

2. Verfahren gemäß Anspruch 1, wobei das Lacton eine oder mehrere Verbindungen ist und ausgewählt wird aus der Gruppe bestehend aus beta-Propiolacton, gamma-Butyrolacton, delta-Valerolacton und epsilon-Caprolacton, bevorzugt beta-Propiolacton.

3. Verfahren gemäß einem der Ansprüche 1 oder 2, wobei das molare Verhältnis zwischen Lacton und den Hydroxyendgruppen des Polyoxyalkylenpolyols 1:1 bis 20:1, bevorzugt von 1,5:1 bis 10:1 und besonders bevorzugt von 2:1 bis 6:1 beträgt.

4. Verfahren gemäß einem der Ansprüche 1 bis 3, wobei der Brönsted-saure Katalysator eine oder mehrere Verbindung(en) ist und ausgewählt wird aus der Gruppe bestehend aus Trifluormethansulfonsäure, Perchlorsäure, Chlorwasserstoffsäure, Bromwasserstoffsäure, Jodwasserstoffsäure, Schwefelsäure, Salpetersäure, Methansulfonsäure, Trichloressigsäure und Trifluoressigsäure, bevorzugt Trifluormethansulfonsäure.

5. Verfahren gemäß einem der Ansprüche 1 bis 4, wobei der Brönsted-saure Katalysator in einer Menge von 0,001 mol-% bis 0,5 mol-%, bevorzugt von 0,003 bis 0,4 mol-% und besonders bevorzugt von 0,005 bis 0,3 mol-% bezogen auf die Menge an Lacton eingesetzt wird.

6. Verfahren gemäß einem der Ansprüche 1 bis 5, wobei das Polyoxyalkylenpolyol einen Anteil von mindestens 75 % sekundären OH-Endgruppen bezogen auf die Summe aus primären und sekundären OH-Endgruppen aufweist, wobei die sekundären OH-Endgruppen mittels der im Experimentalteil offenbarten $^1$H-NMR-Spektroskopie bestimmt worden sind.

7. Verfahren gemäß einem der Ansprüche 1 bis 6, wobei das Polyoxyalkylenpolyol ein Polyetherpolyol und/oder Polyethercarbonatpolyol ist.

8. Verfahren gemäß Anspruch 7, wobei das Polyoxyalkylenpolyol ein Polyetherpolyol ist und das Polyetherpolyol durch Umsetzung einer H-funktionellen Startersubstanz mit Alkylenoxiden in Gegenwart eines Doppelmetallcyanid-Katalysators hergestellt worden ist.

9. Verfahren gemäß Anspruch 7, wobei das Polyoxyalkylenpolyol ein Polyethercarbonatpolyol ist und das Polyethercarbonatpolyol durch Umsetzung einer H-funktionellen Startersubstanz mit Alkylenoxiden und Kohlenstoffdioxid in Gegenwart eines Doppelmetallcyanid-Katalysators hergestellt worden ist.

10. Verfahren gemäß Anspruch 8 oder 9, wobei das Alkylenoxid Ethylenoxid und/oder Propylenoxid ist.

11. Verfahren gemäß Anspruch 10, wobei der Gewichtsanteil des Propylenoxids 80 Gew.-% bis 100 Gew.-% bezogen auf die Summe der dosierten Massen des Propylenoxids und des Ethylenoxids ist.

12. Verfahren gemäß einem der Ansprüche 1 bis 10, wobei das Verfahren ohne Zusatz eines Lösungsmittels durchgeführt wird.

13. Polyoxyalkylenpolyesterpolyol, bevorzugt Polyetherpolyesterpolyol und/oder Polyethercarbonatpolyesterpolyol, erhältlich nach mindestens einem der Ansprüche 1 bis 12, wobei das Polyoxyalkylenpolyesterpolyol einen Anteil von mindestens 80 % primären OH-Endgruppen bezogen auf die Summe aus primären und sekundären OH-Endgruppen aufweist, wobei die primären OH-Endgruppen mittels der im Experimentalteil offenbarten $^1$H- oder $^{13}$C-NMR-Spektroskopie bestimmt worden sind.

14. Polyoxyalkylenpolyesterpolyol, bevorzugt Polyetherpolyesterpolyol und/oder Polyethercarbonatpolyesterpolyol gemäß Anspruch 13, wobei das Polyoxyalkylenpolyesterpolyol, einen Polydispersitätsindex von $\leq$1,20 bevorzugt,

≤1,15 aufweist, wobei der Polydispersitätsindex mittels der im Experimentalteil offenbarten Gel-Permeations-Chromatographie bestimmt worden ist.

15. Verfahren zur Herstellung eines Polyurethans durch Umsetzung des Polyoxyalkylenpolyesterpolyols, bevorzugt des Polyetherpolyesterpolyols und/oder des Polyethercarbonatpolyesterpolyols gemäß Anspruch 13 oder 14 mit einem Polyisocyanat.

Europäisches Patentamt
European Patent Office
Office européen des brevets

**EUROPÄISCHER RECHERCHENBERICHT**

Nummer der Anmeldung

EP 18 21 5191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YONG HU ET AL: "Degradation Behavior of Poly([epsilon]-caprolactone)- b -poly(ethylene glycol)- b -poly([epsilon]-caprolactone) Micelles in Aqueous Solution", BIOMACROMOLECULES, Bd. 5, Nr. 5, 1. September 2004 (2004-09-01), Seiten 1756-1762, XP055560549, US ISSN: 1525-7797, DOI: 10.1021/bm049845j | 13 | INV. C08G18/42 C08G63/42 C08G63/82 |
| Y | * Seite 1757; Abbildung 1 * | 1-15 | |
| X | Aldrich Sigma: "SIGMA-ALDRICH", , 23. Februar 2017 (2017-02-23), XP055560629, Gefunden im Internet: URL:https://www.sigmaaldrich.com/catalog/product/aldrich/570303 [gefunden am 2019-02-22] | 13 | |
| Y | * Seite 1 * | 1-15 | |
| Y,D | GB 1 201 909 A (LAPORTE CHEMICAL) 12. August 1970 (1970-08-12) | 1-7, 13-15 | |
| A | * Ansprüche 1,13,37; Beispiel 11 * | 8-12 | |
| Y | DE 10 2009 031584 A1 (BAYER MATERIALSCIENCE AG [DE]) 5. Januar 2011 (2011-01-05) * Tabelle 1 * | 8-12 | |

**RECHERCHIERTE SACHGEBIETE (IPC)**

C08G
C09J

Der vorliegende Recherchenbericht wurde für alle Patentansprüche erstellt

| Recherchenort | Abschlußdatum der Recherche | Prüfer |
|---|---|---|
| München | 24. Juni 2019 | Buestrich, Ralf |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 21 5191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2019

| Im Recherchenbericht angeführtes Patentdokument | Datum der Veröffentlichung | Mitglied(er) der Patentfamilie | | Datum der Veröffentlichung |
|---|---|---|---|---|
| GB 1201909 A | 12-08-1970 | BE | 715397 A | 18-11-1968 |
| | | DE | 1770451 A1 | 27-01-1972 |
| | | FR | 1590597 A | 20-04-1970 |
| | | GB | 1201909 A | 12-08-1970 |
| | | NL | 6807022 A | 18-11-1968 |
| DE 102009031584 A1 | 05-01-2011 | BR | PI1011807 A2 | 31-05-2016 |
| | | CA | 2767040 A1 | 06-01-2011 |
| | | CN | 102471478 A | 23-05-2012 |
| | | DE | 102009031584 A1 | 05-01-2011 |
| | | EP | 2448996 A1 | 09-05-2012 |
| | | ES | 2432501 T3 | 03-12-2013 |
| | | JP | 2012531506 A | 10-12-2012 |
| | | KR | 20120095338 A | 28-08-2012 |
| | | SG | 177282 A1 | 28-02-2012 |
| | | US | 2012196999 A1 | 02-08-2012 |
| | | WO | 2011000560 A1 | 06-01-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008104723 A1
- US 5032671 A
- GB 1201909 A
- WO 2011000560 A1
- EP 1359177 A
- US 7304172 B2
- US 20120165549 A1
- US 3404109 A
- US 3829505 A
- US 3941849 A
- US 5158922 A

- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- WO 0180994 A1

**In der Beschreibung aufgeführte Nicht-Patentliteratur**

- **COUFFIN et al.** *Poly. Chem,* 2014, vol. 5, 161
- **M. H. CHISHOLM et al.** *Macromolecules,* 2002, vol. 35, 6494

- **S. D. ALLEN.** *J. Am. Chem. Soc.,* 2002, vol. 124, 14284
- *Beispiel Chemical Communications,* 2011, vol. 47, 141-163